# EUROPEAN PATENT APPLICATION

(11) **EP 4 350 862 A1**
(43) Date of publication of application: **10.04.2024**
(21) Application number: 23201114.8
(22) Date of filing: 02.10.2023
(51) Int. Cl.: H01M 50/247, H01M 50/244

(54) **BATTERY HOLDER FOR A BATTERY-OPERATED POWER TOOL OR FOR A VACUUM-CLEANER BRUSH**

(30) Priority: 04.10.2022 IT 202200020415
(71) Applicant: New Ermes Europe S.r.l., 21020 Crosio della Valle (VA) (IT)
(72) Inventor: ROSCHI, Riccardo, 21020 Crosio della Valle (VA) (IT)
(74) Representative: Colombo, Stefano Paolo

(57) **Abstract**

A battery holder for supporting a battery for a power tool powered by a rechargeable battery is described, the battery holder comprising a rear body and a front body, wherein the rear body comprises a support arch and wherein the front body comprises a battery slide configured to support a battery. The battery holder can be connected through a cable to the power tool. The front body can be angularly adjustable relative to the rear body.

## Description

### TECHNICAL FIELD

The present invention relates to the sector of electric devices powered by rechargeable batteries. Electric devices powered by rechargeable batteries may be, for example, work tools (battery-operated drills or screwdrivers, battery-operated drills or screwdrivers, battery-operated planers, battery-operated saws, etc.) or electric gardening tools (hedge cutters, edge trimmers, power saws) or brushes for an electric household appliance for performing cleaning by means of suction (vacuum cleaners, stick cleaners, drum vacuum-cleaners, etc.) and also combined-action devices, namely devices which combine a suction action with a cleansing action (using detergents and/or steam).

In particular, the present invention relates to a battery holder which is adaptable so that it can be fastened to a tube or to a belt of a user or to some other strip-like body.

### PRIOR ART

During recent years many devices which conventionally were powered by a combustion engine or an electric motor connected via cable to the electric mains have been re-designed to function with an electric motor powered by a rechargeable battery.

For example, to mention just a few devices, drills, screwdrivers, saws, planers, hedge cutters, power saws and strimmers which function with a battery-operated electric motor, are available. The battery is typically easily removable so that it may be replaced with a charged battery or so that it can be connected to a charging station.

Often batteries have different shapes depending on the manufacturer. Consequently, each manufacturer configures the equipment made by them with a slot or a slide which is specifically designed for their own batteries. Similarly, each manufacturer supplies battery chargers which are configured for their own batteries.

### SUMMARY OF THE INVENTION

The Applicant has examined the known devices which function with rechargeable batteries, together with their corresponding batteries and battery chargers.

In particular, the Applicant has noticed that it would be desirable to find a solution for increasing the versatility of such equipment and in particular for increasing their autonomy so that they can be used, with the same power performance, for a longer period of time. In fact, many of the aforementioned devices are designed with adequate power for the work to be performed, but often have a limited autonomy. This limited autonomy often discourages users from making greater use of this category of equipment.

The Applicant has noticed that it would be desirable to have a universal battery holder which may be easily adapted to the form of the batteries made by the various manufacturers.

The Applicant has also noticed that it would be desirable to provide a battery holder which can be fastened, in a releasable manner, to a tube (for example a tube of a vacuum cleaner or the like) or to the belt of a user, so that the user may always have easy access to one or more charged batteries so as to be able to increase the autonomy of the equipment and therefore its use.

According to a first aspect, the present invention provides a battery holder for supporting a rechargeable battery for a power tool, the battery holder comprising a rear body and a front body, wherein the rear body comprises a support arch and wherein the front body comprises a battery slide configured to support a battery.

According to embodiments, the front body is angularly adjustable relative to the rear body.

According to embodiments, the battery holder is connected through a cable to the power tool. In embodiments, the battery holder is connected through a cable and a plug to the power tool. The plug can fit a socket on the power tool. Typically, the manufacturer of the power tool designs the battery socket according to a proprietary design so that users are obliged to buy batteries which are correspondingly proprietary designed. Therefore, thanks to the present invention, use of standard batteries which fit the battery slide on the battery holder is possible. This represents an economic benefit for the users.

According to further embodiments, the battery holder is directly connected to the power tool, without a cable.

According to embodiments, the rear body comprises a retaining member which is designed to retain the battery holder with respect to a tube or a belt or the like, wherein the retaining member comprises a pair of arches, each arch being hinged and rotatable with respect to its own axis and comprising a free end.

According to embodiments, the arches are elastically pushed towards the rear body.

According to embodiments, springs are provided in order to force the free ends of the arches against the rear body.

According to embodiments, the free ends of the arches are enlarged, for instance by a sleeve made of rubber or other deformable material which is fitted thereon.

According to embodiments, each arch forms a tunnel which is open at the bottom, but closed at the top.

According to embodiments, the rear body comprises a recessed surface, which is for example substantially cylindrical.

According to embodiments, the front body is freely rotatable relative to the rear body.

According to embodiments, the battery slide is removable and replaceable with a battery slide suitable for a different battery.

According to embodiments, the battery slide is electrically connected to an electric cable protruding from the front body.

According to another aspect, the present invention relates to use of the battery holder according to the invention as a power supply for a vacuum cleaner or the like, wherein the battery holder is engaged with a tube of the vacuum cleaner.

According to another aspect, the present invention relates to use of the battery holder according to the invention as a power supply for a battery-operated power tool, wherein the battery holder is connected via cable to a plug configured to engage with a battery housing on the power tool.

According to another aspect, the present invention provides a vacuum cleaner or a battery-operated power tool comprising a battery holder as indicated above and a rechargeable battery inserted into said battery holder for providing power to the vacuum cleaner or to the battery-operated power tool, wherein the battery holder is engaged with a tube of the vacuum cleaner or a tube of the battery-operated power tool.

According to embodiments, the battery holder is connected via cable to a plug configured to engage with a battery housing on the power tool.

For the present description and appended claims, a power tool is a device which is powered by a rechargeable battery. A power tool can be, for instance, a work tool such as a battery-operated drill or a battery-operated screwdriver, a battery-operated planer, a battery-operated saw, etc. or an electric gardening tool such as a battery-operated hedge cutter, a battery-operated edge trimmer, a battery-operated power saw, a battery-operated brush for an electric household appliance for performing cleaning by means of suction, a battery-operated vacuum cleaner, a battery-operated stick cleaner, a battery-operated drum vacuum-cleaner, and also a battery-operated combined-action device, namely a device which combine a suction action with a cleansing action (using detergents and/or steam).

### BRIEF DESCRIPTION OF THE FIGURES

A detailed description of the invention now follows, being provided purely by way of a non-limiting example, to be read with reference to attached figures in which:
- Fig. 1 is a front view of the battery holder according to an embodiment of the present invention;
- Fig. 1.1 shows (by way of example) a battery slide which can be fastened to the front body;
- Fig. 2 is a side view of the battery holder according to Fig. 1;
- Fig. 3 is a view, from above, of the battery holder according to Fig. 1;
- Fig. 3.1 shows two retaining members, i.e. a right-hand retaining member and a left-hand retaining member;
- Fig. 4 is an axonometric view of the battery holder according to Fig. 1;
- Fig. 5 is a front view of the battery holder according to Fig. 1, fastened to a large-diameter tube;
- Fig. 6 is a side view of the battery holder according to Fig. 5;
- Fig. 7 is a view, from above, of the battery holder according to Fig. 5;
- Fig. 8 is an axonometric view of the battery holder according to Fig. 5;
- Fig. 9 is a view, from above, of the battery holder according to Fig. 1, fastened to a small-diameter tube;
- Fig. 10 is an axonometric view of the battery holder according to Fig. 9;
- Fig. 11 is a front view of the battery holder according to Fig. 1, fastened to the belt of a user;
- Fig. 12 is a side view of the battery holder according to Fig. 11;
- Fig. 13 is a view, from above, of the battery holder according to Fig. 11;
- Fig. 14 is an axonometric view of the battery holder according to Fig. 11;
- Fig. 15 and Fig. 16 are views of the battery holder with a low-capacity and high-capacity battery;
- Figs. 17.1, 17.2, 17.3 and 17.4 show the battery holder angularly adjusted in different positions;
- Fig. 18 shows a battery-operated power tool; and
- Fig. 19 shows the tool of Fig. 18 which is made lighter as a result of the present invention.

### DETAILED DESCRIPTION

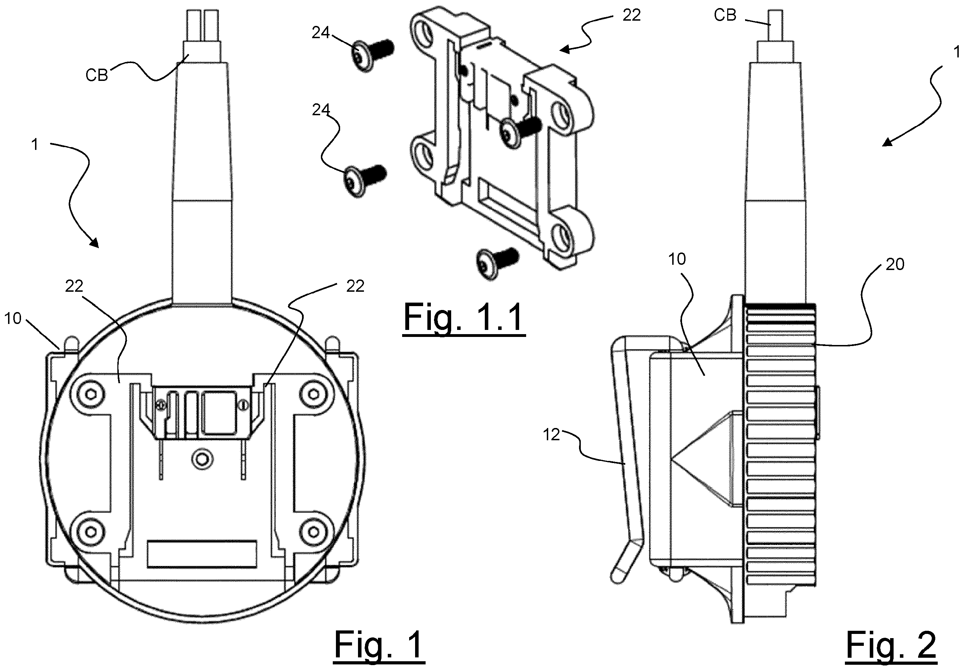

With reference to Figures 1, 1.1, 2, 3 and 4 a first embodiment of the battery holder 1 according to the present invention is described.

The battery holder 1 comprises a rear body 10 and a front body 20. According to embodiments, the front body 20 and the rear body 10 are fixed together rotatably: the front body 20 is rotatable relative to the rear body 10.

According to one embodiment, the front body 20 is rotatable relative to the rear body 10 in a substantially free manner, namely without being subject to braking or friction. Alternatively, substantially stable separate positions may be provided: for example, a vertical position, such as that shown in Figures 1-4, and other positions oriented at 45° with respect to the preceding position, i.e. 45°, 90°, 135°, 180°, 225°, 270°, 315°, 360°.

The rear body 10 is configured to support a retaining member. The retaining member 12 is for example designed to retain the battery holder 1 with respect to a tube T or a belt B or the like.

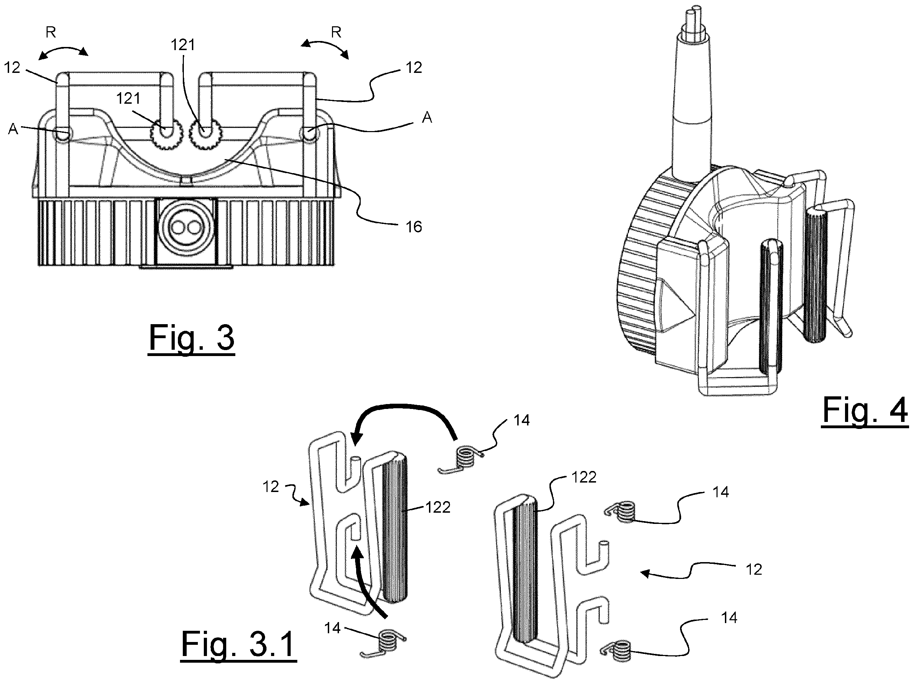

According to one embodiment, as shown in particular in Fig. 3.1, the retaining member 12 comprises two shaped arches 12, for example, as shown in Fig. 3.1. Advantageously, the arches 12 are rotatable towards and away from each other (arrow R). Each arch 12 is rotatable about an axis of rotation indicated by the letter A in Fig. 3. Each arch 12 has a free end 121 opposite to the axis of rotation A.

In order to simplify the present description, the two arches 12 (that shown on the right and that on left) will be indicated by the same reference number and the differences between them will not be highlighted. In reality, one arch is a mirror image of the other one and, at least in the specific embodiment shown, are not interchangeable with each other. However, these differences will be evident for the person skilled in the art.

Springs 14 are provided in order to recall the arches 12 into the closed position, namely in order to force the free ends 121 of the arches 12 against the rear body 10. Advantageously, the springs 14 are torsion springs.

According to embodiments, the free ends 121 of the arches 12 are enlarged. For example, a sleeve 122 made of rubber or other deformable material may be fitted thereon.

The arches 12 may be made using a wire consisting of metallic material, for example steel. The surface of the wires may be treated to avoid corrosion, facilitate the cleaning operations and improve the physical appearance. For example, it may be chrome-plated.

The rear body 10 may be made of a plastic or thermoplastic material. Advantageously it may have a roughly square shape.

According to embodiments, such as that shown in Fig 3, the rear body 10 is shaped so as to comprise a recess 16, for example with a cylindrical surface or with a V-shaped groove. This facilitates, as will become clear below, the coupling of the support holder 1 to a tube or the like.

The front body 20 has a roughly circular shape and is configured to support a slide 22 for a battery. The battery slide 22 may have a shape which is also different from that shown. In general, with the battery slide 22 it is possible to provide a releasable physical support between a battery BT and the rear body 10. Advantageously, the battery slide 22 allows the battery BT to be slid until it reaches a stable position. The battery BT may be removed by sliding it in the opposite direction.

According to embodiments, the battery slide 22 can be fastened to the front body 20 by means of threaded members 24 so that it can be replaced with another battery slide configured for another type of battery BT.

According to embodiments, the battery slide 22 forms an electrical contact between the battery BT and a cable CB.

The cable CB is partly shown in the various figures. Advantageously, a reinforcement (for example made of rubber) is provided in order to reinforce the zone where the cable is attached to the front body 20.

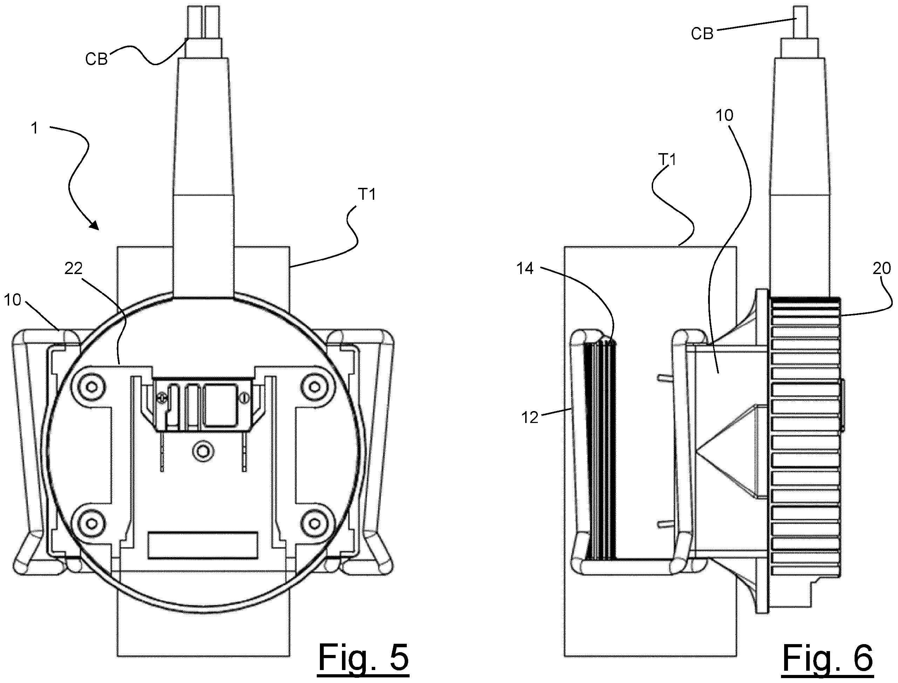

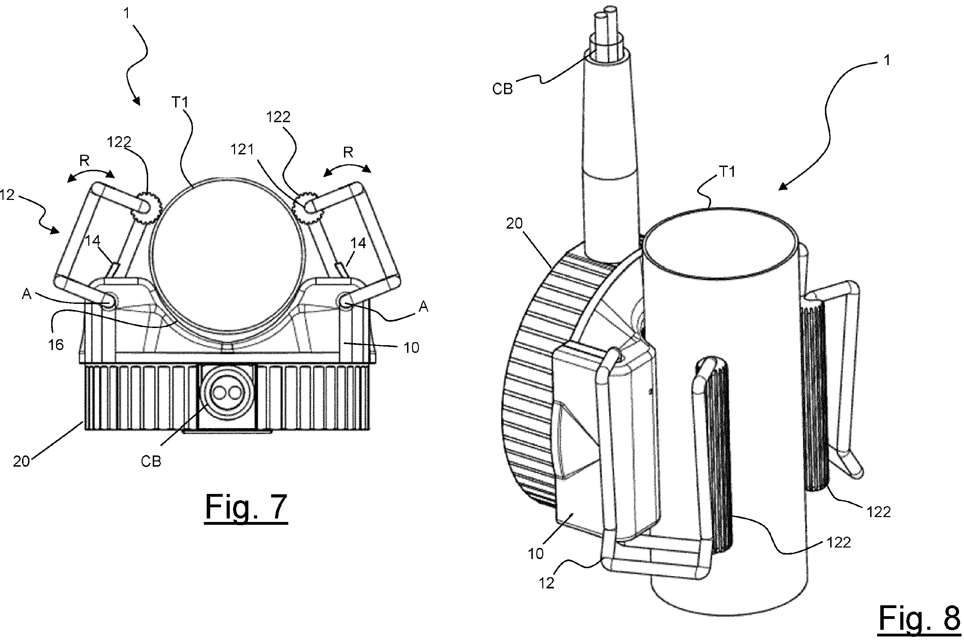

Figures 5-8 show the battery holder 1 of Figures 1-4 engaged with a tube T1 having a relatively large diameter. Such a tube T1 may be for example a tube of a vacuum cleaner, a battery-operated stick cleaners or a similar electric household appliance. In addition, it may be the tube of any electric household appliance, for example a strimmer, an edge trimmer, a hedge cutter or the like.

As is clear from Figures 5-8, the large-diameter tube T1 matches perfectly the shape of the recess 16 of the rear body 10 and is retained against the bottom of the recess 16 by means of the arches 12 and the torsion springs 14. Basically, the arches 12 clasp the tube T1 and apply pressure at the free ends of the arches 12.

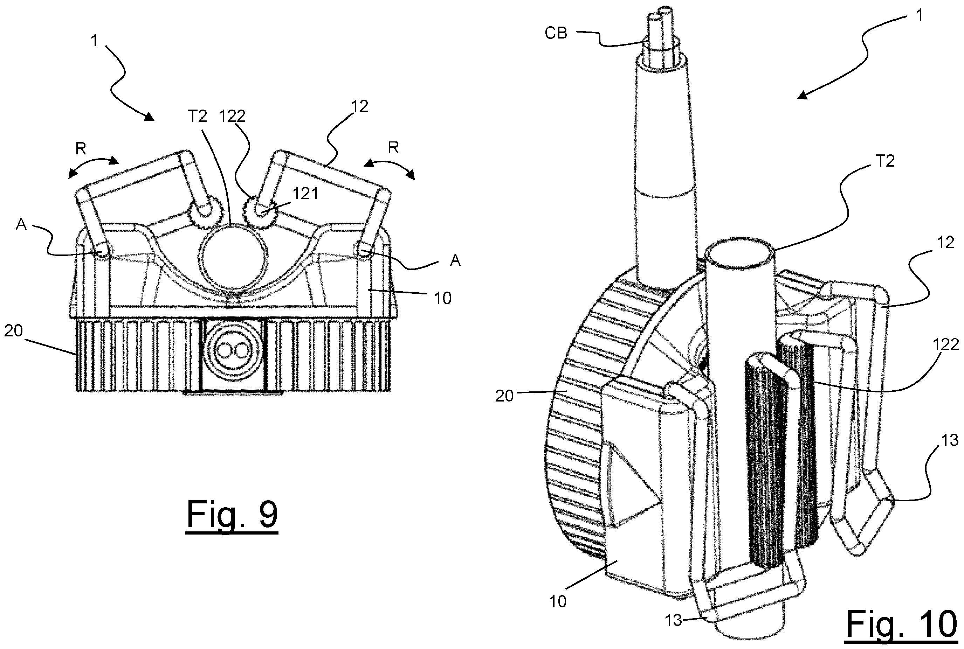

Figures 9 and 10 show the battery holder 1 of Figures 1-4 engaged with a tube T2 having a relatively small diameter. Such a tube T2 may be for example a tube of a vacuum cleaner, a battery-operated stick cleaner or a similar electric household appliance. In addition, it may be the tube of any electric tool, for example a strimmer, an edge trimmer, a hedge cutter or the like.

In this case also, the recess 16 of the rear body 10 provides a stable position for the tube T2, which is in any case held against the bottom of the recess 16 by means of the two arches 12 which are pressed elastically against it.

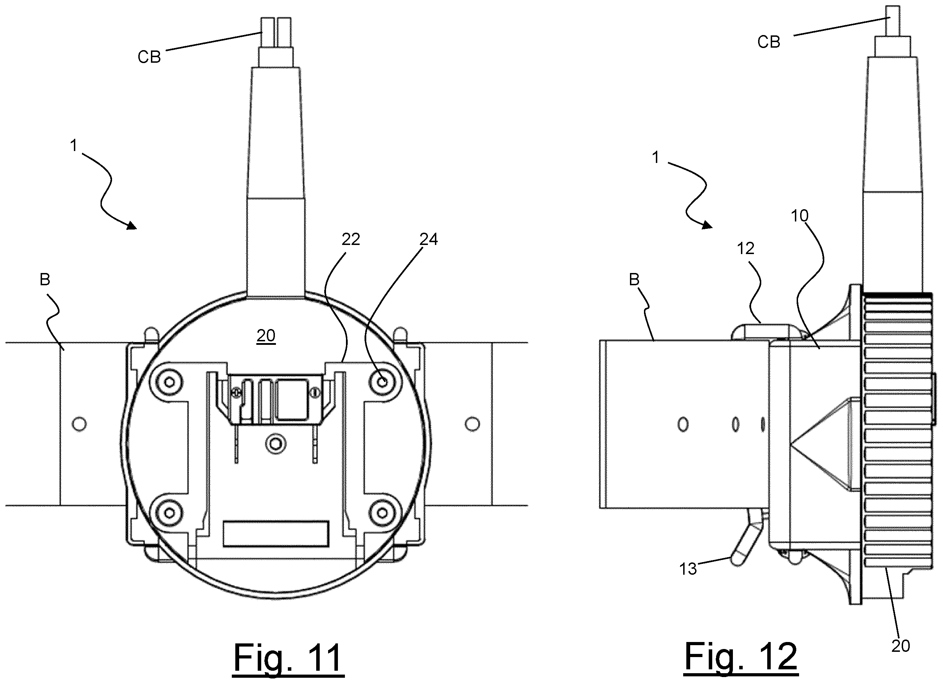

The battery holder 1 according to the present invention is also suitable for being engaged with the belt B of a user, as shown in Figures 11-14.

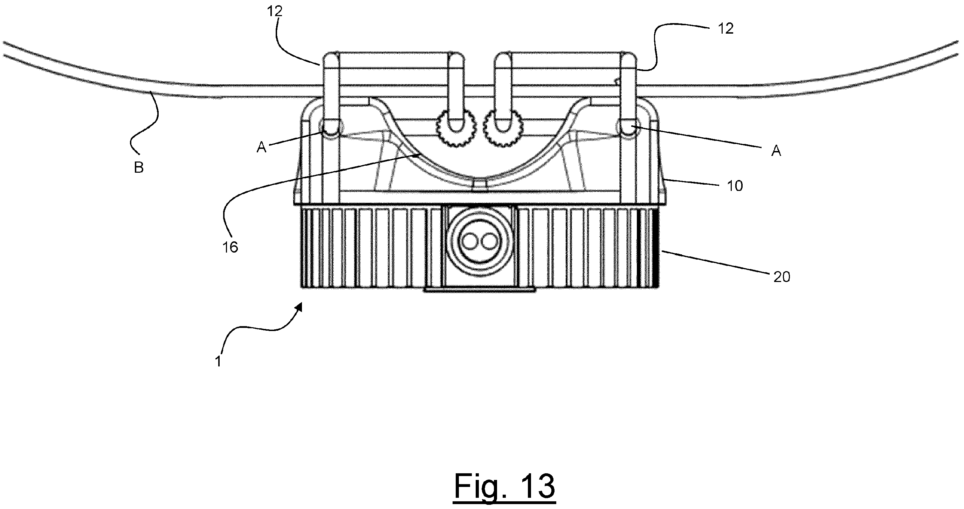

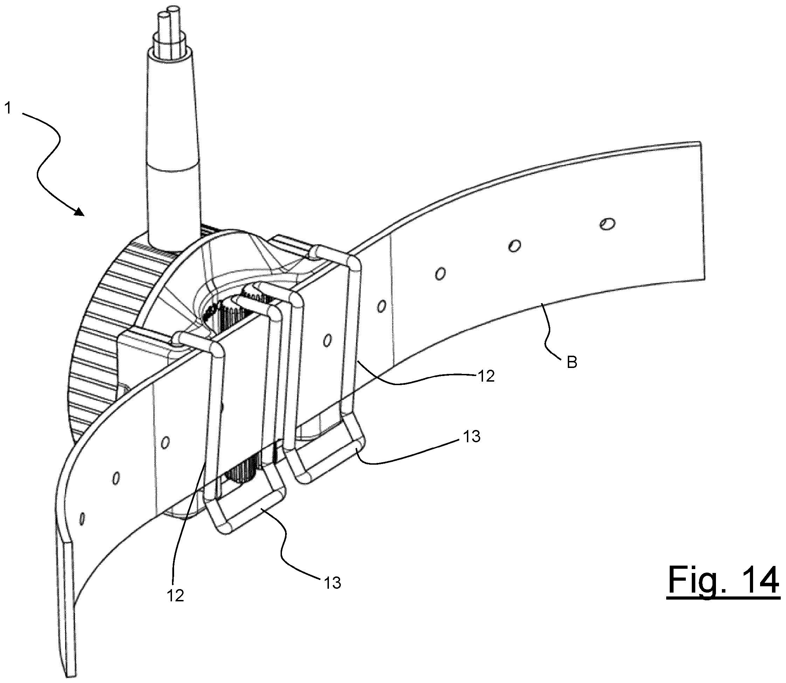

The way in which the battery holder 1 is coupled to a belt B can be clearly seen in Figs. 13 and 14. Basically, each arch 12 forms a kind of tunnel which is open at the bottom, but closed at the top, for the belt. The battery holder 1 may be mounted by sliding it from the top downwards and may be removed with the opposite movement.

According to advantageous embodiments, each arch 12 has a bottom end 13 inclined towards the outside (with respect to the rear body) so as to form a guide for inserting the belt B more easily.

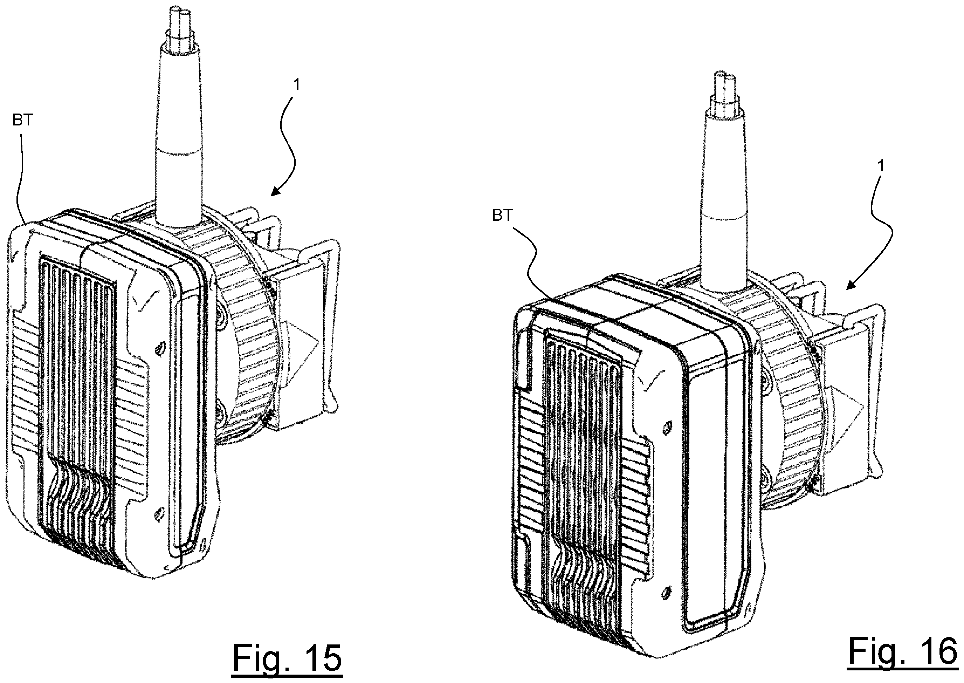

Figures 15 and 16 show the battery holder 1 of Figures 1-4 with a low capacity or higher capacity battery BT. In fact, the battery holder 1 according to the invention is suitable for being used to support a battery of any shape and/or size, provided it is compatible with a suitable battery slide 22 mounted on the front body 20.

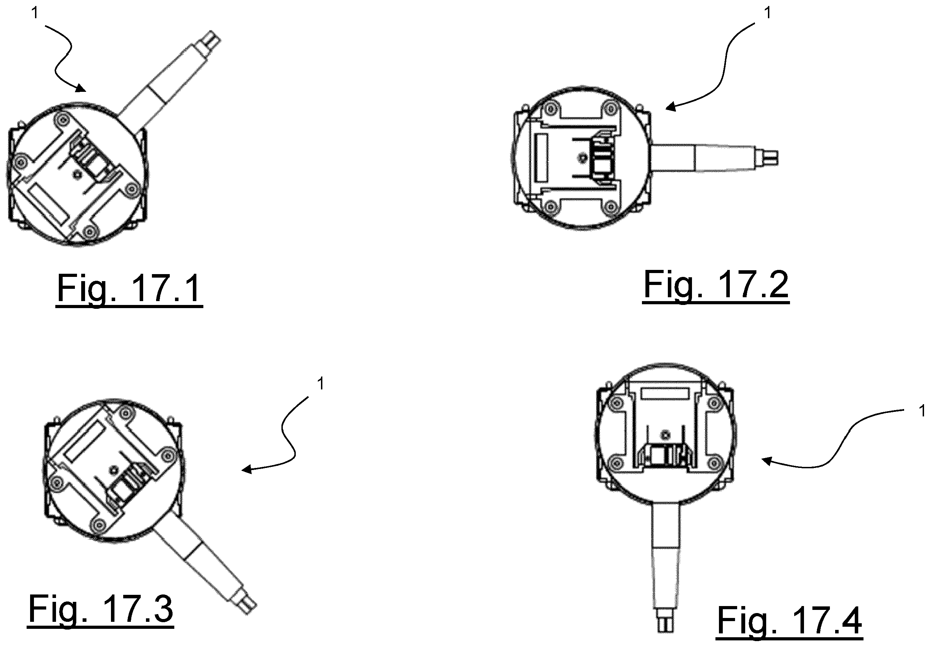

As mentioned above, the front body 20 may be angularly adjusted either freely or using fixed positions with respect to the rear body 10. Figure 17 shows by way of example some of these positions.

The battery holder 1 according to the present invention may be used in various ways. For example, it may be used by a user to carry, attached to the belt, a charged back-up battery for a tool which is being used or which is about to be used. This increases its practical design and allows the tool in question to be used for longer.

The battery holder 1 according to the invention may also be used to power, as an external battery, the motor of a vacuum cleaner or an electric stick cleaner. Advantageously, it may be fastened to the tube of a vacuum cleaner both with a large diameter (T1) or small diameter (T2). The power supply may be provided via a cable. The advantage is that it thus becomes possible to use the battery of any manufacturer and not necessarily that of the vacuum-cleaner manufacturer. In this case the battery holder must be equipped with universal battery connectors.

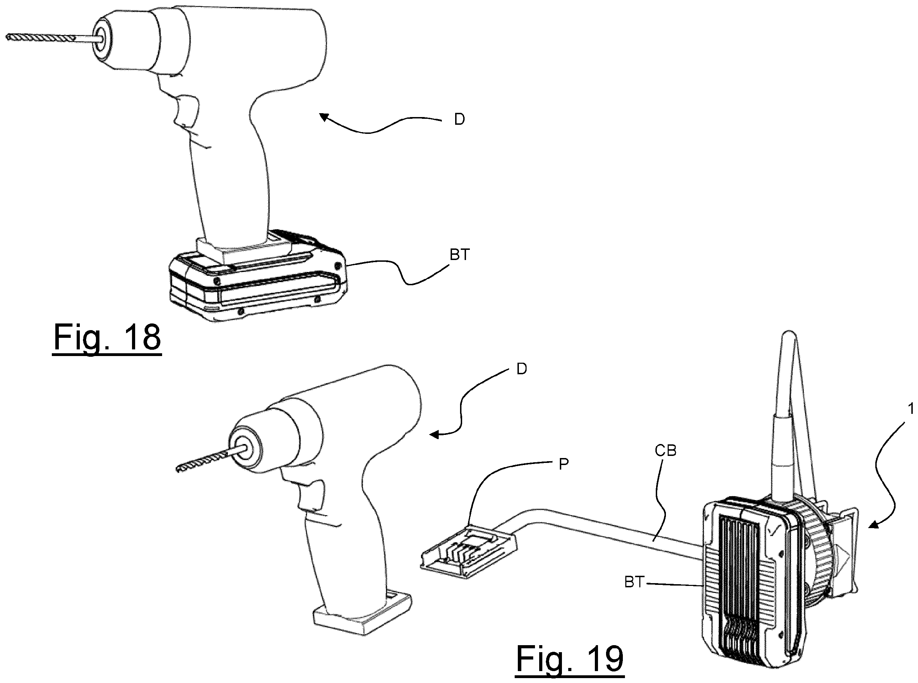

A further possible use of the battery holder according to the invention is shown in Figures 18 and 19. By way of example a battery-operated power drill D (or screwdriver) is shown. In order to make the drill D lighter, the battery BT may be removed and a plug P having a shape and size compatible with those of the battery may be inserted in place of it. The plug P, as shown in Fig. 19, may be connected via a cable CB to the battery holder on which a power supply battery is mounted.

In this way, the weight of the tool D is reduced considerably, and the battery used may also be different from that indicated by the tool manufacturer. The battery could have, for example, a different amperage or the battery holder may be equipped with a set of connectors for different batteries. The weight of the battery, which may be larger in size, is supported by the user who carries the battery hung onto the belt. This situation is particularly advantageous especially when the tool (for example the drill) must be used in a position which is awkward and/or for long periods of time.

## Claims

1. A battery holder (1) for supporting a rechargeable battery (BT) for a power tool (D), the battery holder (1) comprising a rear body (10) and a front body (20), wherein the rear body (10) comprises a support arch (12) and wherein the front body (20) comprises a battery slide (22) configured to support a battery (BT).

2. The battery holder (1) of claim 1, wherein the battery holder (1) is connected through a cable to the power tool (D).

3. The battery holder (1) of claim 1 or 2, wherein the front body (20) is angularly adjustable relative to the rear body (10).

4. The battery holder (1) of claim 1, 2 or 3, wherein the rear body (10) comprises a retaining member (12) which is designed to retain the battery holder (1) with respect to a tube (T) or a belt (B) or the like, wherein the retaining member comprises a pair of arches (12), each arch (12) being hinged (A) and rotatable (R) with respect to its own axis and comprising a free end (121).

5. The battery holder (1) of claim 4, wherein the arches (12) are elastically pushed (14) towards the rear body (10).

6. The battery holder (1) of claim 5, wherein springs (14) are provided in order to force the free ends (121) of the arches (12) against the rear body (10).

7. The battery holder (1) of claim 6, wherein the free ends (121) of the arches (12) are enlarged, for instance by a sleeve (122) made of rubber or other deformable material which is fitted thereon.

8. The battery holder (1) of any of claims 4-7, wherein each arch (12) forms a tunnel which is open at the bottom, but closed at the top.

9. The battery holder (1) according to any one of the preceding claims, wherein the rear body (10) comprises a recessed surface (16), which is for example substantially cylindrical.

10. The battery holder (1) according to any one of the preceding claims, wherein the front body (20) is freely rotatable relative to the rear body (10).

11. The battery holder (1) according to any one of the preceding claims, wherein the battery slide (22) is removable and replaceable with a battery slide suitable for a different battery.

12. The battery holder (1) of claim 11, wherein the battery slide (22) is electrically connected to an electric cable (CB) protruding from the front body (20).

13. Use of the battery holder (1) according to any one of claims 1-12 as a power supply for a vacuum cleaner or a part thereof or a battery-operated power tool (D), wherein the battery holder (1) is engaged with a tube (T1, T2) of the vacuum cleaner or a tube of the battery-operated power tool.

14. Use of the battery holder (1) according to any one of claims 1-12 as a power supply for a battery-operated power tool (D), wherein the battery holder (1) is connected via cable (CB) to a plug (P) configured to engage with a battery housing on the power tool (D).

15. A vacuum cleaner or a battery-operated power tool (D) comprising a battery holder (1) according to any one of claims 1-12 and a rechargeable battery inserted into said battery holder (1) for providing power to the vacuum cleaner or to the battery-operated power tool (D), wherein the battery holder (1) is engaged with a tube (T1, T2) of the vacuum cleaner or a tube of the battery-operated power tool (D).

16. The vacuum cleaner or a battery-operated power tool (D) of claim 15, wherein the battery holder (1) is connected via cable (CB) to a plug (P) configured to engage with a battery housing on the power tool (D).
